# EUROPEAN PATENT APPLICATION

(11) **EP 4 322 113 A1**
(43) Date of publication of application: **14.02.2024**
(21) Application number: 22825196.3
(22) Date of filing: 31.05.2022
(51) Int. Cl.: G06T 17/20, G06T 7/11, G06T 5/50, A61C 8/00, A61C 13/00, A61C 9/00, A61C 5/77

(54) **IMAGE PROCESSING DEVICE AND IMAGE PROCESSING METHOD**

(30) Priority: 18.06.2021 KR 20210079520; 02.03.2022 KR 20220026906
(71) Applicant: Medit Corp., Seoul 07207 (KR)
(72) Inventor: KIM, Jin Young, Seoul 07207 (KR); KIM, Du Su, Seoul 07207 (KR)
(74) Representative: Taor, Simon Edward William
(86) International application number: PCT/KR2022/007770
(87) International publication number: WO 2022/265270

(57) **Abstract**

Provided are an image processing method and an image processing apparatus. The image processing method includes obtaining three-dimensional (3D) scan data by scanning an object including a hole, obtaining data corresponding to the hole region, based on the scan data, and displaying a final model representing a filled shape of the hole, based on the scan data and the data corresponding to the hole region.

## Description

### Technical Field

The present disclosure relates to image processing apparatuses and image processing methods, and more specifically, to an image processing apparatus and an image processing method capable of obtaining an image of a filled shape of a hole in an object from a scan image of the object including the hole.

### Background Art

There are cases in which teeth need to be extracted inevitably, such as when teeth are severely damaged by aging, decay, severe tooth decay, or an external impact. When teeth are extracted, if left unattended, the surrounding teeth may lie in an empty space or move, which may adversely affect the surrounding teeth. Therefore, in such a case, an implant into a part where a tooth is missing is necessary.

The implant may include a fixture, an abutment, and a crown. The fixture is a structure corresponding to the root of a natural tooth and is inserted into the gum bone. The abutment is an intermediate connecting part that connects the fixture to the crown, and rises above the gums. The crown is a final prosthetic appliance of a tooth model, and generally refers to a part having the appearance of a tooth.

The abutment has a screw hole for coupling to the fixture. After the abutment is scanned, the crown is designed and created based on the scanned abutment. When the crown is designed based on the scanned screw hole, the inner surface of the crown may be designed erroneously due to the screw hole. Therefore, in order to prevent this problem, the abutment is scanned after making the screw hole flat by filling the screw hole with resin or the like before scanning the abutment, and, after the scanning is completed, a process of removing the resin is performed. However, this process is not easy, and work efficiency is quite low.

### Disclosure

### Technical Problem

Provided are an image processing method for obtaining an image in which a hole in an object is automatically filled, when the object including the hole is scanned, and an apparatus for performing operations of the image processing method.

### Technical Solution

According to an aspect of the present disclosure, an image processing method includes obtaining three-dimensional (3D) scan data by scanning an object including a hole, obtaining data corresponding to the hole region, based on the scan data, and displaying a final model representing a filled shape of the hole, based on the scan data and the data corresponding to the hole region.

The displaying of the final model may include deleting data for an inner region of the hole from the scan data, and displaying the final model obtained by synthesizing scan data from which the data for the inner region of the hole has been deleted with the data corresponding to the hole region.

The obtaining of the data corresponding to the hole region, based on the scan data, may include obtaining a 3D model surrounding the scan data, obtaining mesh data corresponding to a surface of the object, based on the 3D model and the scan data, and obtaining the data corresponding to the hole region from the mesh data.

The 3D model may include a 3D convex hull for the scan data.

The obtaining of the mesh data corresponding to the surface of the object, based on the 3D model and the scan data, may include obtaining first mesh data, based on the 3D model, and obtaining second mesh data, based on the first mesh data and the scan data. A density of second meshes included in the second mesh data may be greater than a density of first meshes included in the first mesh data.

The obtaining of the second mesh data, based on the first mesh data and the scan data, may include projecting the first meshes included in the first mesh data onto third meshes included in the scan data, subdividing the projected meshes, and generating the second meshes by shrinking the subdivided meshes.

The image processing method may further include detecting an inner region of the hole from the scan data, wherein the projecting of the first meshes onto the third meshes may include projecting the first meshes onto the third meshes, based on whether the first meshes correspond to the inner region of the hole.

A difference between the density of the second meshes and a density of the third meshes included in the scan data may be less than a preset value.

A surface area of the second meshes may be smaller than a surface area of the first meshes.

The obtaining of the data corresponding to the hole region from the mesh data may include deleting mesh data overlapping the scan data from the mesh data.

The displaying of the final model may include detecting a boundary of a region where the mesh data and the scan data do not overlap, and deleting data for the inner region of the hole from the scan data, based on the boundary, and displaying the final model obtained by synthesizing scan data from which the data for the inner region of the hole has been deleted with the data corresponding to the hole region.

The displaying of the final model may include displaying a hole-filled region to be distinguished from the other region.

The object may include an abutment including a screw hole.

According to an aspect of the present disclosure, an image processing apparatus includes a display, a memory storing one or more instructions, and a processor, wherein the processor is configured to execute the one or more instructions stored in the memory to obtain 3D scan data by scanning an object including a hole, obtain data corresponding to the hole region, based on the scan data, and control the display to display a final model representing a filled shape of the hole, based on the scan data and the data corresponding to the hole region.

### Advantageous Effects

With regard to an image processing apparatus and an oral cavity image processing method according to a disclosed embodiment, in order to obtain an image in which a hole in an object is filled, the hole needs to be filled with resin before the object is scanned, and then the resin needs to be removed after scanning.

Accordingly, work efficiency may be improved, and an image in which a hole is filled may be easily obtained even for an object inserted into the oral cavity.

### Description of Drawings

The disclosure may be readily understood by reference to the following detailed description and the accompanying drawings, in which reference numerals refer to structural elements.
FIG. 1 is a view for explaining an image processing system according to an embodiment.
FIG. 2 is a diagram illustrating the reason why a screw hole needs to be filled with a filler when an abutment is scanned according to an embodiment.
FIG. 3 illustrates a method, performed by an image processing apparatus according to an embodiment, of obtaining scan data of an object.
FIGS. 4 and 5 are views illustrating a method, performed by an image processing apparatus according to an embodiment, of generating an image in which a hole in an object is filled.
FIG. 6 is a diagram illustrating a method of synthesizing scan data with wrapping mesh data according to an embodiment.
FIG. 7 is a diagram illustrating a method of determining a region to be projected when wrapping mesh data is generated from initial mesh data according to an embodiment.
FIG. 8 is a diagram for explaining a method, performed by an image processing apparatus according to an embodiment, of processing an image of an unscanned region.
FIG. 9 is a diagram for explaining a method, performed by an image processing apparatus according to an embodiment, of processing a groove in the surface of an object.
FIGS. 10A and 10B are diagrams for explaining a method of processing an image when a hole region in an object is filled in scan data according to an embodiment.
FIG. 11 is a diagram for explaining a method of processing an image when a hole region in an object is filled in scan data according to an embodiment.
FIG. 12 is a diagram illustrating a method, performed by an image processing apparatus according to an embodiment, of displaying a filled hole in a final model.
FIG. 13 is a diagram for explaining a method, performed by an image processing apparatus according to an embodiment, of obtaining an image in which a hole in an object is filled.
FIG. 14 is a flowchart of an image processing method according to an embodiment.
FIG. 15 is a block diagram of an image processing apparatus according to an embodiment.

### Mode for Invention

The principle of the present disclosure is explained and embodiments are disclosed so that the scope of the present disclosure is clarified and one of ordinary skill in the art to which the present disclosure pertains implements the present disclosure. The disclosed embodiments may have various forms.

Throughout the specification, like reference numerals or characters refer to like elements. In the present specification, all elements of embodiments are not explained, but general matters in the technical field of the present disclosure or redundant matters between embodiments will not be described. Terms 'part' and 'portion' used herein may be implemented using software or hardware, and, according to embodiments, a plurality of 'parts' or 'portions' may be implemented using a single unit or element, or a single 'part' or 'portion' may be implemented using a plurality of units or elements. The operational principle of the present disclosure and embodiments thereof will now be described more fully with reference to the accompanying drawings.

An image used herein may include an image representing at least one tooth or an oral cavity including at least one tooth.

The image used herein may be a two-dimensional (2D) image of a target object, or a three-dimensional (3D) model or 3D image representing the target object in a 3D manner. The image used herein may indicate data required to two-dimensionally or three-dimensionally represent an object, for example, raw data obtained from at least one image sensor. In detail, the raw data is obtained to create an image, and may be data (for example, 2D data) obtained from at least one image sensor included in a 3D scanner when an object is scanned using the 3D scanner.

An object used herein may include a tooth, a gingiva, at least a portion of an oral cavity, and/or an artificial structure insertable into the oral cavity (for example, an orthodontic device, an implant, an artificial tooth, or an orthodontic support member inserted into the oral cavity). The orthodontic device may include at least one of a bracket, an attachment, an orthodontic screw, a lingual orthodontic device, and a removable orthodontic support device.

Embodiments now will be described more fully hereinafter with reference to the accompanying drawings.

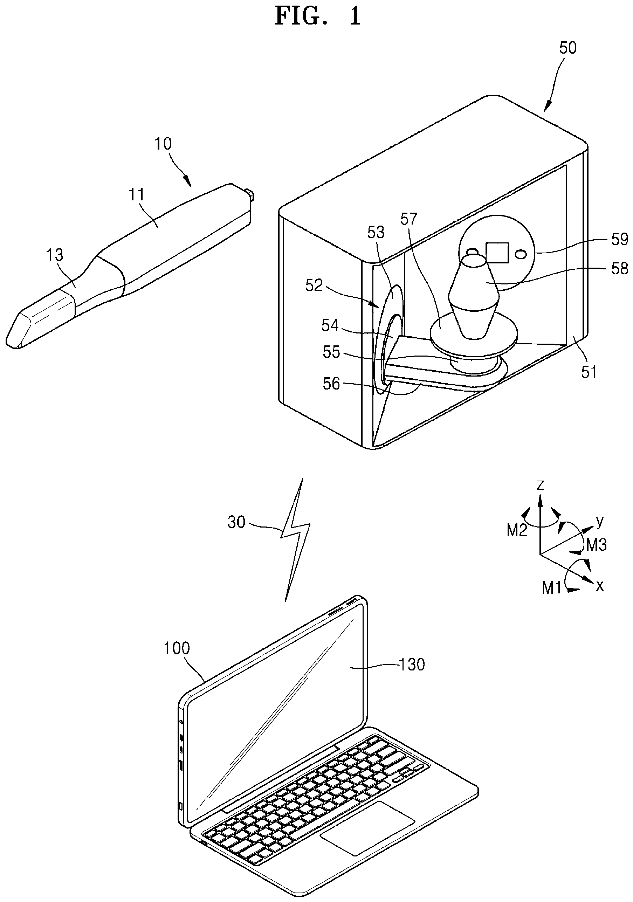

FIG. 1 is a view for explaining an image processing system according to an embodiment.

Referring to FIG. 1, the image processing system includes 3D scanners 10 and 50 and an intraoral image processing apparatus 100. The 3D scanners 10 and 50 and the image processing apparatus 100 may perform communication through a communication network 30.

The 3D scanners 10 and 50, which are devices scanning an object, may be medical devices obtaining an image of the object.

The 3D scanner 10 and 50 may obtain an image of at least one of an oral cavity, an artificial structure, and a plaster model of the oral cavity or artificial structure.

The 3D scanner 10 and 50 may include at least one of an oral scanner 10 and a table scanner 50.

According to an embodiment, the 3D scanner 10 and 50 may include the oral scanner 10. The oral scanner 10 may be a handheld type for scanning an oral cavity while a user holds the oral scanner 10 with a hand and moves the oral scanner 100. The oral scanner 10 may obtain an image of an oral cavity including at least one tooth by being inserted into the oral cavity and scanning the tooth in a non-contact manner. The oral scanner 10 may have a shape that may be inserted into and withdrawn from an oral cavity, and may scan the inside of the oral cavity of a patient by using at least one image sensor (for example, an optical camera).

The oral scanner 10 may include a body 11 and a tip 13. The body 11 may include a light projector (not shown) projecting light, and a camera (not shown) obtaining the image by photographing the object.

The tip 13 is a portion inserted into the oral cavity, and may be detachably mounted on the body 11. The tip 13 may include a light path changer to direct the light projected from the body 11 toward the object and direct light received from the object toward the body 11.

The oral scanner 10 may obtain surface information on the object as raw data in order to obtain an image of a surface of at least one of a tooth inside the oral cavity, a gingiva, and an artificial structure insertable into the oral cavity (for example, an orthodontic device including a bracket and a wire, an implant, an artificial tooth, or an orthodontic support member inserted into the oral cavity).

According to an embodiment, the 3D scanner 10 and 50 may include the table scanner 50. The table scanner 50 may be a scanner obtaining, as raw data, surface information about an object 58 by scanning the object 58 by using rotation of a table 57. The table scanner 50 may scan a surface of the object 58, such as a plaster model or impression model of an oral cavity, an artificial structure insertable into an oral cavity, or a plaster model or impression model of the artificial structure.

The table scanner 50 may include an internal space provided by being dented in an inner direction of a housing 51. The object 58 may be placed in the side surface of the internal space and the internal space may include a moving portion 52 capable of moving the object 58. The moving portion 52 may move in an up-and-down direction in a z-axis direction. The moving portion 52 may include a fixed base 53 connected to a first rotating portion 54, the first rotating portion 54 rotatable in a first rotating direction M1 based on one point on the fixed base 53 as a center axis, for example, an x-axis as the center axis, and a beam portion 56 connected to and protruding from the first rotating portion 54. The beam portion 56 may extend or be shortened in an x-axis direction.

A second rotating portion 115 having a cylindrical shape and rotatable in a second rotating direction M2 by using a z-axis as a rotating axis may be connected to the other end of the beam portion 56. The table 57 rotating together with the second rotating portion 55 may be provided on one surface of the second rotating portion 55.

An optical unit 590 may be formed in the internal space. The optical unit 59 may include a light projector projecting pattern light to the object 58, and at least one camera obtaining a plurality of 2D frames by receiving light reflected from the object 58. The optical unit 59 may further include a second rotating portion (not shown) rotating using the center of the light projector as a rotating axis while being combined to the side surface of the internal space. The second rotating portion may rotate the light projector, a first camera, and a second camera in a third rotating direction M3.

The 3D scanner 10 and 50 may transmit the obtained raw data to the image processing apparatus 100 through a communication network 130. Image data obtained by the 3D scanner 10 and 50 may be transmitted to the image processing apparatus 100 connected through a wired or wireless communication network 30.

The image processing apparatus 100 may refer to any electronic device that may be connected to the 3D scanner 10 and 50 through the wired or wireless communication network 30, may receive a 2D image obtained by scanning the object from the 3D scanner 10 and 50, and may generate, process, display, and/or transmit an image, based on the received 2D image.

The image processing apparatus 100 may be, but is not limited to, a computing device, such as a smartphone, a laptop computer, a desktop computer, a personal digital assist (PDA), or a tablet personal computer (PC). The intraoral image processing apparatus 100 may also exist in the form of a server (or a server device) for processing an intraoral image.

The image processing apparatus 100 may process the 2D image data received from the 3D scanner 10 and 50 to generate information, or process the 2D image data to generate an image. The intraoral image processing apparatus 100 may display the generated information and the generated image through a display 130.

The 3D scanner 10 or 50 may transmit the raw data obtained through a scan operation to the image processing apparatus 100 without changes. In this case, the image processing apparatus 100 may generate a 3D intraoral image three-dimensionally representing the oral cavity, based on the received raw data. The image processing apparatus 100 according to an embodiment may generate 3D data (e.g., surface data, mesh data, etc.) representing the shape of the surface of the object in a 3D manner, based on the received raw data.

Because the '3D image' may be generated by three-dimensionally modeling the object based on the received raw data, the 3D image may be referred to as a '3D model'. Hereinafter, a model or image representing the object in a 2D or 3D manner will be collectively referred to as an 'image'.

The image processing apparatus 100 may analyze, process, and display a generated image and/or transmit the generated image to an external device.

As another example, the 3D scanner 10 and 50 may obtain the raw data through a scan of the object, may process the obtained raw data to generate an image corresponding to the object, and may transmit the generated image to the image processing apparatus 100. In this case, the image processing apparatus 100 may analyze, process, display, and/or transmit the received image.

According to an embodiment, the image processing apparatus 100 is an electronic device capable of generating and displaying an image representing the object in a 3D manner, and will be described in detail below.

When receiving the raw data obtained by scanning the object from the 3D scanner 10 and 50, the image processing apparatus 100 according to an embodiment may process the received raw data to generate a 3D image (or a 3D model). For convenience of description, the 3D image of the object generated by the image processing apparatus 100 will now be referred to as 'scan data'.

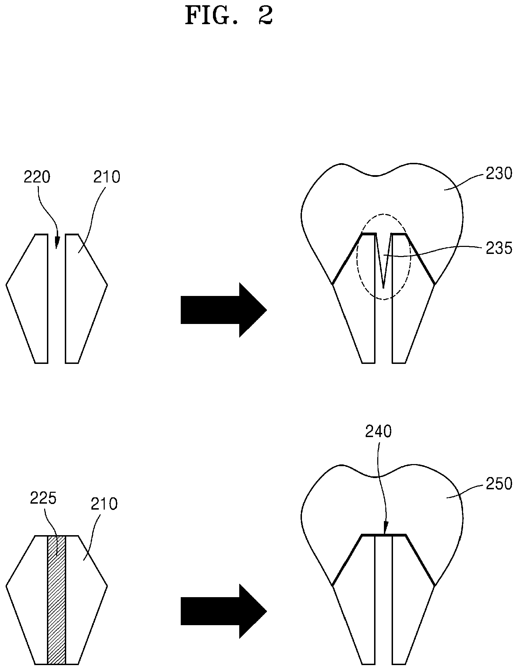

For example, the 3D scanner 10 and 50 may scan an object including a hole. In embodiments of the present disclosure, it is described that the object including the hole is an abutment including a screw hole, but the present disclosure is not limited thereto. An abutment is a structure that connects a crown and a fixture included in an implant, and may include a screw hole for coupling with the fixture. The abutment is necessarily scanned after the screw hole formed in the abutment is filled with a filler such as resin. This will be described in greater detail with reference to FIG. 2.

The image processing apparatus 100 according to an embodiment may receive raw data obtained by scanning the abutment from the 3D scanner 10 and 50, and obtain scan data of the abutment based on the received raw data.

FIG. 2 is a diagram illustrating the reason why a screw hole needs to be filled with a filler when an abutment is scanned according to an embodiment.

Referring to FIG. 2, an abutment 210 according to an embodiment may include a screw hole 220. When scan data is obtained by scanning the abutment 210 without filling the screw hole 220, and then, a crown 230 is generated based on the obtained scan data, the crown 230 may be erroneously generated by the screw hole included in the scan data. For example, a lower portion 235 of the crown 230 may be generated by protruding in a direction of the screw hole 220, and the protrusion may later collide with a screw fixed to a fixture through the screw hole 220.

In order to prevent this, when the screw hole 220 included in the abutment 210 is filled with a filler 225 and flattened, the abutment 210 needs to be scanned while the screw hole 220 is filled with the filler 225. When the abutment 210 is scanned after the screw hole 220 is filled with the filler 225, a screw hole region appears as a flat surface 240 in the scan data, and a crown 250 may be generated along the flat surface.

However, after scanning is completed, the filler 225 filled in the screw hole 220 of the abutment 210 needs to be removed. A process of filling the screw hole 220 with the filler 225 in a flat manner, scanning the abutment 210, and then removing the filler 225 again is not easy, and greatly reduces work efficiency. In addition, there is a problem that the filler 225 is not filled in the screw hole of the abutment installed in an oral cavity.

Accordingly, the image processing apparatus 100 according to an embodiment may generate an image in which the screw hole is filled, based on the scan data obtained by scanning the abutment 210 without filling the screw hole of the abutment.

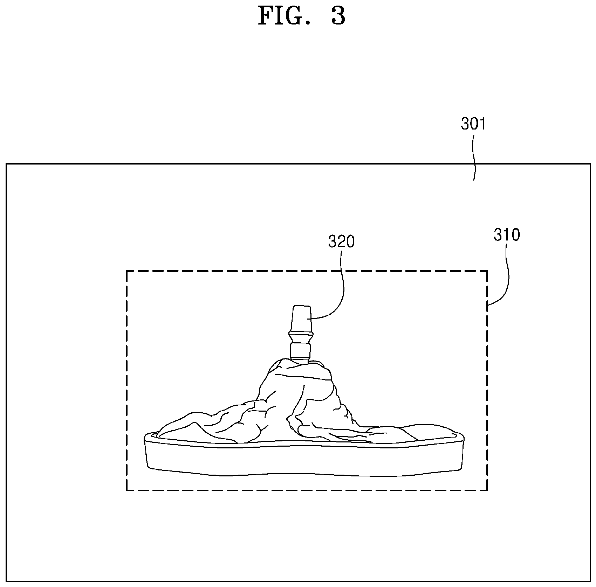

FIG. 3 illustrates a method, performed by an image processing apparatus according to an embodiment, of obtaining scam data of an object.

The image processing apparatus 100 according to an embodiment may generate scan data, based on the raw data obtained by the 3D scanner 10 and 50. The image processing apparatus 100 may visually output generated scan data 310, through a user interface screen 301. The user interface screen 301 may be a screen of the display 130 of FIG. 1. The user interface screen 301 may include at least one menu for enabling a user to analyze or process the scan data 310.

Referring to FIG. 3, the scan data 310 may be scan data based on the raw data obtained by the table scanner 50. For example, the raw data may be obtained by scanning an abutment fixed to a jig by an adhesive member by using the table scanner 50. However, embodiments are not limited thereto, and the raw data may be obtained by scanning an abutment installed in the oral cavity by using the oral scanner 10.

As shown in FIG. 3, when the scan data 310 includes scan data for the adhesive member or the jig in addition to the abutment, only scan data 320 for the abutment may be set as a region of interest in the scan data 310. For example, the image processing apparatus 100 may set a region of interest, based on a user input obtained using a selection tool such as a brush. In this case, a region selected based on the user input may be set as the region of interest, and the selected region may be displayed to be distinguished from an unselected region.

Alternatively, the image processing apparatus 100 according to an embodiment may automatically detect the scan data 320 for the abutment from the scan data 310 without a user's input, and may set the detected scan data 320 for the abutment as a region of interest. The image processing apparatus 100 may detect the scan data 320 for the abutment from the scan data 310 by using artificial intelligence (Al).

When the scan data 310 includes only scan data for the abutment, a separate process of setting a region of interest is not needed.

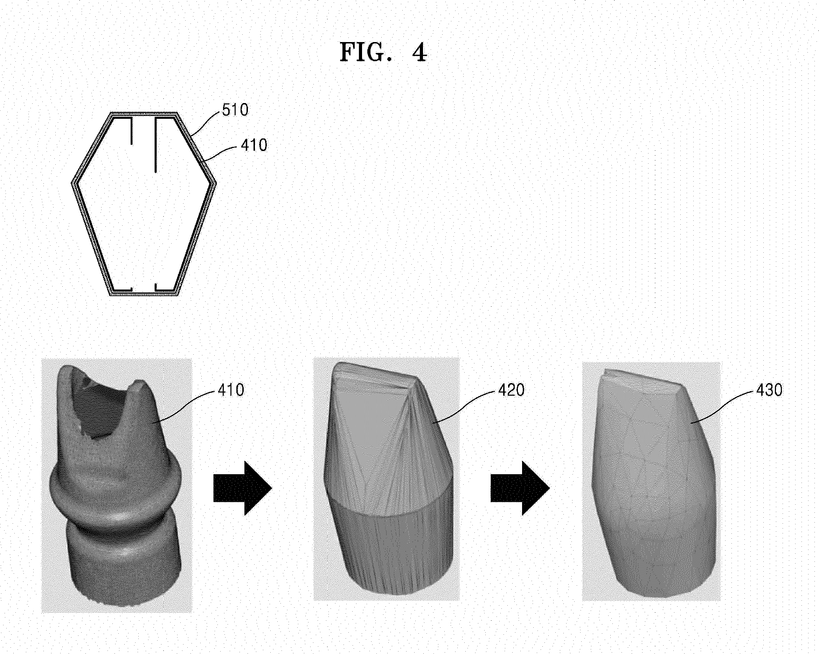

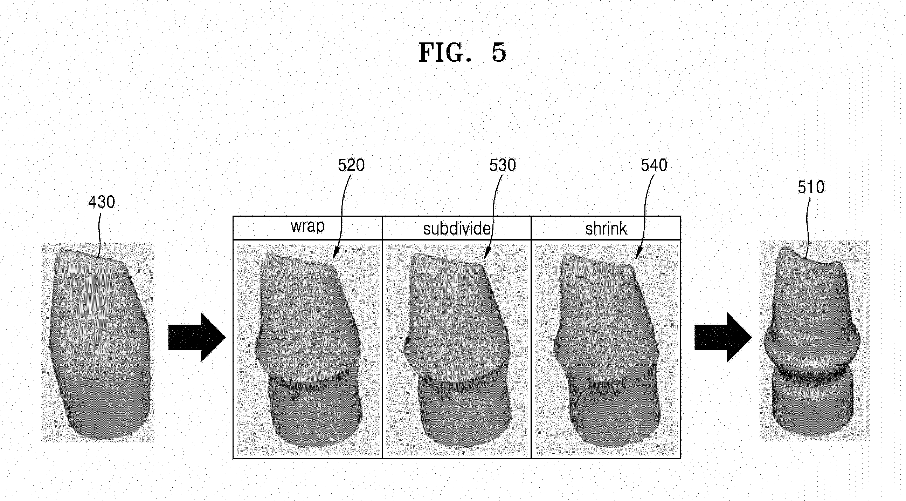

FIGS. 4 and 5 are views illustrating a method, performed by an image processing apparatus according to an embodiment, of generating an image in which a hole of an object is filled.

Referring to FIG. 3, the image processing apparatus 100 according to an embodiment may generate wrapping mesh data 510, based on scan data 310 of an object including a hole.

The image processing apparatus 100 may generate a 3D model 420 surrounding the scan data 410. For example, the image processing apparatus 100 may generate a 3D convex hull of the scan data 410 by using a 3D convex hull algorithm. The 3D convex hull may include, but is not limited to, convex polygons generated based on some of vertex data included in the scan data 410.

The image processing apparatus 100 may generate initial mesh data 430 composed of triangles, based on the 3D model 420. The triangles included in the initial mesh data 430 may have a more uniform shape than triangles included in the 3D model 420.

Referring to FIG. 5, the image processing apparatus 100 may generate wrapping mesh data 510, based on the initial mesh data 430.

For example, the image processing apparatus 100 may project first meshes (triangles) included in the initial mesh data 430 to meshes (triangles) included in the scan data 410 (hereinafter, referred to as 'wrapping 520'). The image processing apparatus 100 may subdivide the projected meshes (hereinafter referred to as 'subdivide' 530). The image processing apparatus 100 may increase the density of the first meshes while maintaining the overall shape of the initial mesh data through a subdivision process.

The image processing apparatus 100 may generate meshes close to the meshes included in the scan data 410 of the object by shrinking the subdivided meshes (hereinafter referred to as 'shrink' 540).

The image processing device 100 may generate the wrapping mesh data 510 by repeating wrapping-subdivision-shrink processes 520, 530, and 540 on the initial mesh data 430. For example, the image processing apparatus 100 may end repetition of the wrapping-subdivision-shrink processes 520, 530, and 540 when a difference between the density of meshes generated by repeating the wrapping-subdivision-shrink processes 520, 530, and 540 and the density of the meshes included in the scan data 410 is less than a preset value.

The density of second meshes included in the wrapping mesh data 510 may be greater than the density of first meshes included in the initial mesh data 430.

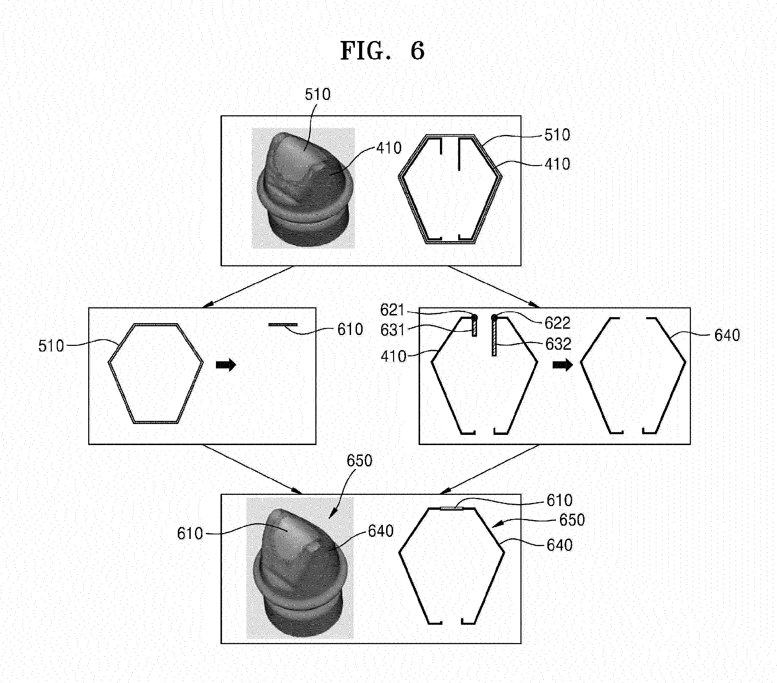

FIG. 6 is a diagram illustrating a method of synthesizing scan data with wrapping mesh data according to an embodiment.

Referring to FIG. 6, the image processing apparatus 100 may align the scan data 410 of the object with the wrapping mesh data 510. In this regard, a method of aligning the scan data 410 with the wrapping mesh data 510 uses a known alignment algorithm, but is not limited thereto. Alternatively, when the wrapping mesh data 510 is already aligned with the scan data 410, the image processing apparatus 100 may not perform an operation of aligning the wrapping mesh data 510 with the scan data 410.

The image processing apparatus 100 may detect a non-overlapping region as a hole region of the object while the scan data 410 and the wrapping mesh data 510 are aligned. The image processing apparatus 100 may delete data other than mesh data 610 corresponding to the detected hole region from the wrapping mesh data 510.

In detail, in a state where the scan data 410 and the wrapping mesh data 510 are aligned, the image processing apparatus 100 may generate a first ray in a first direction that is a normal direction from vertices included in the wrapping mesh data 510 and a second ray in a second direction opposite to the first direction, and may delete a corresponding vertex included in the wrapping mesh data 510 when the first ray or the second ray intersect with a vertex included in the scan data 410 within a threshold distance . On the other hand, when the first ray and the second ray do not intersect with the vertex included in the scan data 410 within the threshold distance, the image processing apparatus 100 may not delete the corresponding vertex included in the wrapping mesh data 510. Accordingly, the image processing apparatus 100 may delete data other than mesh data 610 corresponding to the hole region from the wrapping mesh data 510.

In addition, the image processing apparatus 100 may detect an inner region of a screw hole from the scan data 410 with respect to a boundary of a non-overlapping region, in a state where the scan data 410 and the wrapping mesh data 510 are aligned. For example, as shown in FIG. 6, the image processing apparatus 100 may detect first data 631 and second data 632 as data of the inner region of the screw hole with respect to a first boundary point 621 and a second boundary point 622 of a region of the scan data 410 that does not overlap with the wrapping mesh data 510. The image processing apparatus 100 may delete the data of the inner region of the screw hole from the scan data 410.

Alternatively, the image processing apparatus 100 may first detect the first data 631 and the second data 632 of the inner region of the screw hole from the scan data 410, and detect the boundary of the inner region of the screw hole (e.g., the first boundary point 621 and the second boundary point 622) with respect to the detected inner region of the screw hole. However, embodiments are not limited thereto.

The image processing apparatus 100 according to an embodiment may generate a final model 650 by synthesizing the mesh data 510 corresponding to the hole region in the wrapping mesh data and the remaining data 640 obtained by deleting the inner region of the screw hole in the scan data 410. The final model 650 may include an image in which the screw hole is filled.

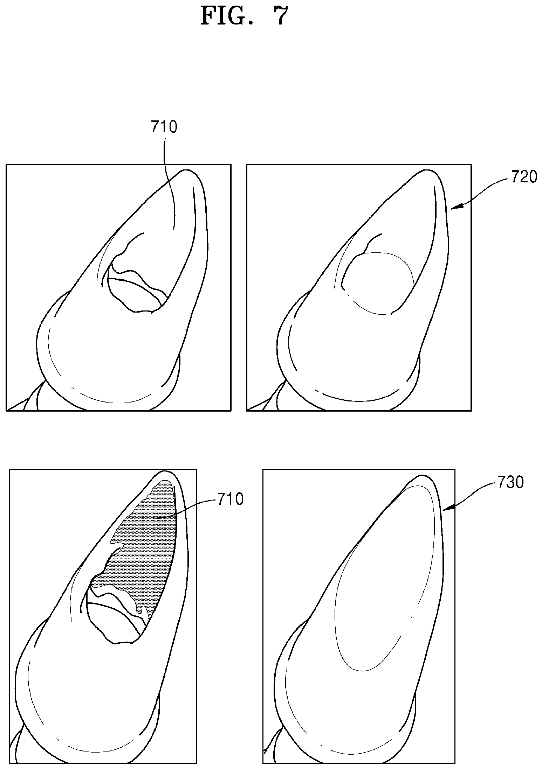

FIG. 7 is a diagram illustrating a method of determining a region to be projected when wrapping mesh data is generated from initial mesh data according to an embodiment.

Referring to FIG. 7, when performing projection on an inner region 710 of a screw hole of scan data upon generating the wrapping mesh data from the initial mesh data, the image processing apparatus 100 according to an embodiment may generate a final model as a first image 720. For example, when the image processing apparatus 100 performs projection on the inner region 610 of the screw hole, the wrapping mesh data includes a mesh surface shape corresponding to the inner region 710 of the screw hole. Accordingly, the wrapping mesh data and the scan data overlap in the inner region 710 of the screw hole, and accordingly, the image processing apparatus 100 may not detect mesh data (e.g., the mesh data 610 of FIG. 6) corresponding to a hole region in the wrapping mesh data. Accordingly, when the scan data and the wrapping mesh data are synthesized, the scan data of the inner region 71 0 of the screw hole may not be deleted, and the first image 720 may represent a form in which a portion of the screw hole is not filled.

On the other hand, when not performing projection on the inner region 710 of a screw hole upon generating the wrapping mesh data from the initial mesh data, the image processing apparatus 100 according to an embodiment may generate a final model as a second image 730. For example, when not performing projection on the inner region 710 of the screw hole, the wrapping mesh data and scan data do not overlap in the hole region, and the image processing apparatus 100 may detect the mesh data (e.g., the mesh data 610 of FIG. 6) corresponding to the hole region in the wrapping mesh data. When the scan data and the wrapping mesh data are synthesized, the screw hole region of the scan data may be filled using the mesh data corresponding to the hole region. Accordingly, the second image 730 may represent a shape in which the screw hole region is completely filled.

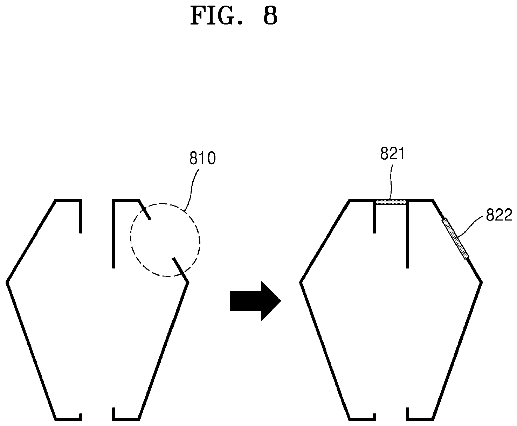

FIG. 8 is a diagram for explaining a method, performed by an image processing apparatus according to an embodiment, of processing an image of an unscanned region.

Referring to FIG. 8, an unscanned region 810 that is not a hole of an object may exist in scan data according to an embodiment. In the case of the unscanned region 810, the scan data and the wrapping mesh data do not overlap each other, and, when the scan data and the wrapping mesh data are synthesized, not only the hole region but also the unscanned region 810 are filled with wrapping mesh data 821 and 822. In other words, the unscanned region 810 is represented as the wrapping mesh data 822 in the final model.

The unscanned region 810 may be represented as the wrapping mesh data 822 or may be represented as scan data by performing a scan operation again. When the unscanned region 810 is represented as scan data by performing a scan operation again, the image processing apparatus 100 according to an embodiment may detect the inner region of the screw hole from the scan data, and may detect the boundary of the detected inner region of the screw hole, based on the detected inner region of the screw hole. Accordingly, the image processing apparatus 100 may determine whether the unscanned region 810 includes the inner region of the screw hole and the boundary between the inner region of the screw hole. When the unscanned region 810 does not include the inner region of the screw hole and the boundary of the inner region of the screw hole, the image processing apparatus 100 may obtain the scanned data by performing a scan operation again without filling the unscanned region 810 with the wrapping mesh data.

Accordingly, the unscanned region 810 may be represented as the scan data rather than the wrapping mesh data in the final model.

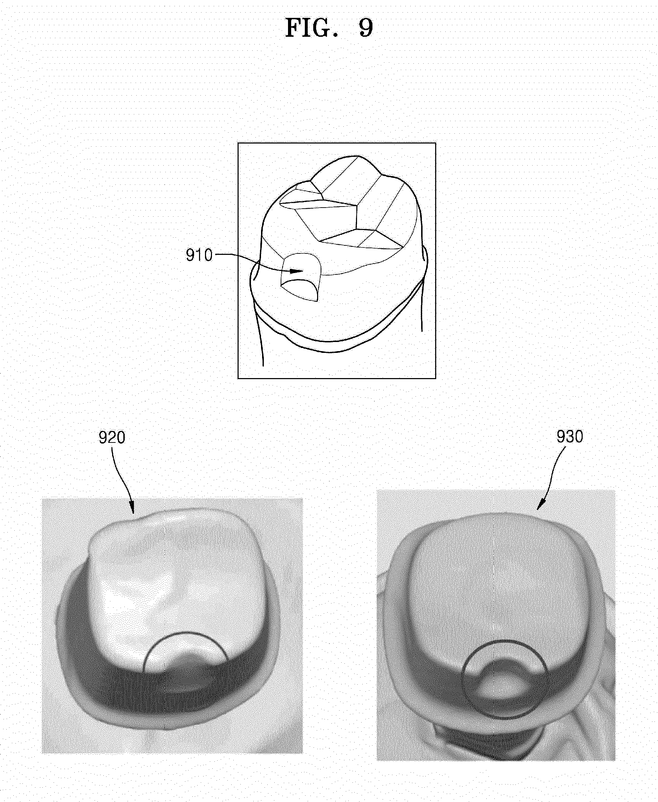

FIG. 9 is a diagram for explaining a method, performed by an image processing apparatus according to an embodiment, of processing a groove existing on the surface of an object.

Referring to FIG. 9, an object according to an embodiment may include a groove 910.

When the image processing apparatus 100 according to an embodiment recognizes a groove region as the inner region of a hole to generate the wrapping mesh data from the initial mesh data as described above with reference to FIG. 7, if the groove region is excluded from a projection region, a final model 920 may appear in a shape in which a groove on the surface of an object is filled.

Therefore, when the image processing apparatus 100 distinguishes the groove region from the hole region to generate the wrapping mesh data from the initial mesh data, the image processing apparatus 100 may perform projection on the groove region without performing projection on the hole region.

When the image processing apparatus 100 according to an embodiment performs projection on the groove 910 upon generating the wrapping mesh data from the initial mesh data, the wrapping mesh data includes mesh data corresponding to the groove 910. Accordingly, the wrapping mesh data and the scan data overlap each other in the region of the groove 910, and when the scan data and the wrapping mesh data are synthesized, the scan data for the region of the groove 910 is not deleted. Accordingly, the groove may not be filled in a final model 930, and may appear as scan data for the groove region.

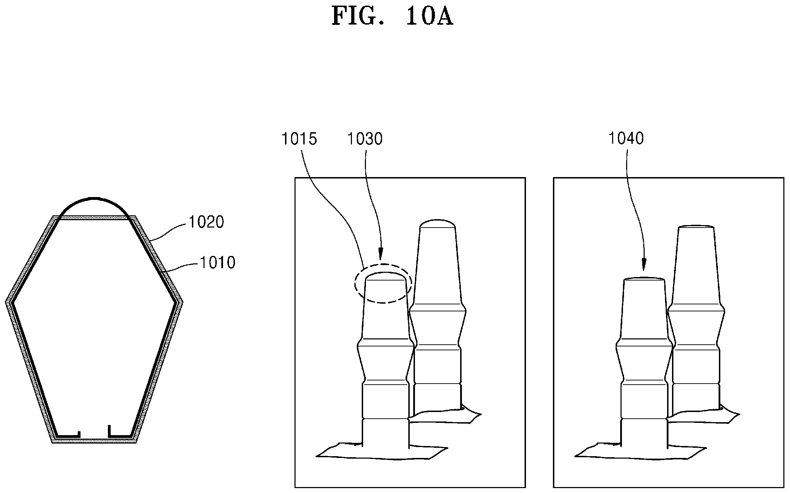

FIG. 10A is a diagram for explaining a method of processing an image when a hole region of an object is filled in scan data according to an embodiment.

Referring to FIG. 10A, in a process of post-processing scan data for the object including a hole, according to an embodiment, data for the hole region may be filled. For example, when the scan data is post-processed according to a fill hole algorithm, the hole region to be filled and the remaining region are gently connected to each other, and thus, an upper surface of the object may appear convex in the scan data.

In this case, when scan data 1010 and wrapping mesh data 1020 are synthesized, a non-overlapping region does not exist, and data corresponding to a hole region may not be obtained from the wrapping mesh data 1020. Accordingly, a final model may be generated as a first image 1030 including only the scan data 1010.

To prevent this problem, the image processing apparatus 100 according to an embodiment may check whether a spherical region exists at an end portion of an abutment in the scan data 1010. When a spherical region 1015 exists, the image processing apparatus 100 may ignore scan data of the spherical region 1015 and generate wrapping mesh data. For example, when the wrapping mesh data is generated from initial mesh data, the image processing apparatus 100 may not perform projection on the spherical region 1015.

When not performing projection on the spherical region 1015 upon generating the wrapping mesh data from the initial mesh data, the image processing apparatus 100 according to an embodiment may generate a final model as a second image 1040. For example, if projection is not performed on the spherical region 1015, the wrapping mesh data includes mesh data of a flat-surface shape in the spherical region 1015.

Accordingly, when the wrapping mesh data and the scan data do not overlap each other within a preset distance in the spherical region 1015 and the scan data and the wrapping mesh data are synthesized, the scan data for the spherical region 1015 may be deleted. Accordingly, the second image 1040 may represent a shape in which the hole region is filled to be flat by the wrapping mesh data.

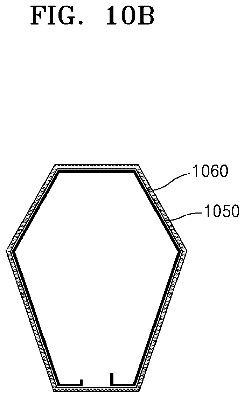

FIG. 10B is a diagram for explaining a method of processing an image when a hole region of an object is filled in scan data according to an embodiment.

Referring to FIG. 10B, in a process of post-processing scan data for the object including a hole, according to an embodiment, data for the hole region may be filled. For example, when the hole has a small diameter and post-processing is performed in a state where scan data for the inner region of the hole is not obtained, the upper surface of the object may appear as a flat shape in which the hole is filled, in the post-processed scan data. In this case, when scan data 1050 and wrapping mesh data 1060 are synthesized, a non-overlapping region does not exist, and data corresponding to a hole region may not be obtained from the wrapping mesh data 1060. Accordingly, the scan data 1050 may be generated as a final model.

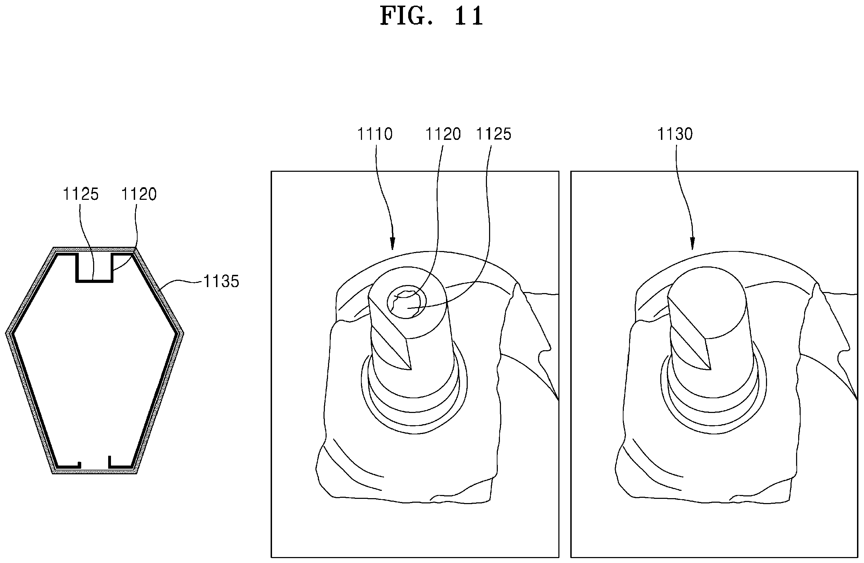

FIG. 11 is a diagram for explaining a method of processing an image when a hole region of an object is filled in scan data according to an embodiment.

Referring to FIG. 11, in a process of post-processing scan data for the object including a hole, according to an embodiment, partial data of the hole region may be filled. In this case, when scan data and wrapping mesh data are synthesized, a non-overlapping region does not exist, and data corresponding to the hole region may not be obtained from the wrapping mesh data. Accordingly, a final model may be generated as a first image 1110 including only the scan data.

To prevent this problem, the image processing apparatus 100 according to an embodiment may detect not only an inner region 1120 of the hole but also a bottom region 1125 filled during a post-processing process. The image processing apparatus 1120 may ignore scan data for the inner region 1120 of the hole and the bottom region 1125 and generate wrapping mesh data 1135. For example, when the image processing apparatus 1120 generates the wrapping mesh data 1135 from initial mesh data, the image processing apparatus 100 may not perform projection on the inner region 1120 of the hole and the bottom region 1125 filled during post-processing.

When not performing projection on the inner region 1120 of the hole and the bottom region 1125 filled during post-processing upon generating the wrapping mesh data 1135 from the initial mesh data, the image processing apparatus 100 according to an embodiment may generate a final model as a second image 1130. For example, when projection is not performed on the inner region 1120 of the hole and the bottom region 1125 filled during post-processing, the wrapping mesh data 1135 does not include mesh data corresponding to the inner region 1120 of the hole and the bottom region 1125 filled during post-processing.

Accordingly, when the wrapping mesh data 1135 and the scan data do not overlap each other within a preset distance in the inner region 1120 of the hole and the bottom region 1125 filled during post-processing and the scan data and the wrapping mesh data 1135 are synthesized, the scan data for the inner region 1120 of the hole and the bottom region 1125 filled during post-processing may be deleted. Accordingly, the second image may represent a form in which the hole region is filled by the wrapping mesh data 1135.

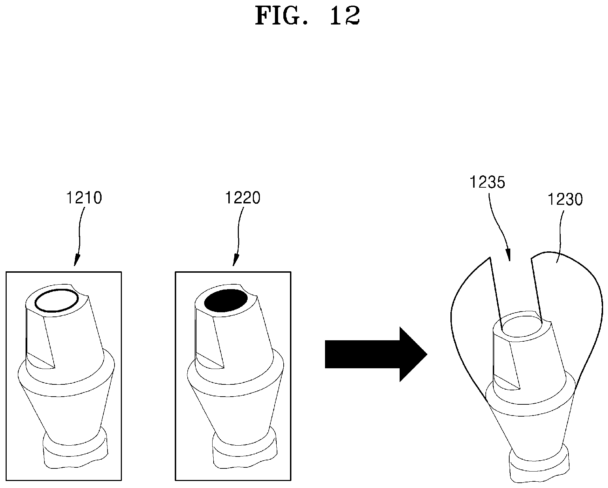

FIG. 12 is a diagram illustrating a method, performed by an image processing apparatus according to an embodiment, of displaying a filled hole in a final model.

Referring to FIG. 12, the image processing apparatus 100 according to an embodiment may display a final model of an object in which a hole region is filled. For example, the image processing apparatus 100 may display final images 1210 and 1220 of an abutment in which a screw hole region is filled.

The image processing apparatus 100 according to an embodiment may display the screw hole region of the abutment to be distinguished from the other region in the final images 1210 and 1220.

For example, the image processing apparatus 100 may display a boundary line of the screw hole region of the abutment as in the first final image 1210, or may display the screw hole region in a different color from the other region as in the second final image 1220. However, embodiments are not limited thereto.

The image processing apparatus 100 may generate a crown image 1230 combined with the abutment, based on the final images 1210 and 1220. To fasten a screw through a crown hole and an abutment hole after mounting the crown on the abutment, a crown hole 1235 having a location, size, and angle corresponding to the screw hole of the abutment needs to be also created in the crown. Accordingly, the screw hole region displayed in the final images 1210 and 1220 may be used as guide information about the location, size, angle, and the like of the crown hole 1235.

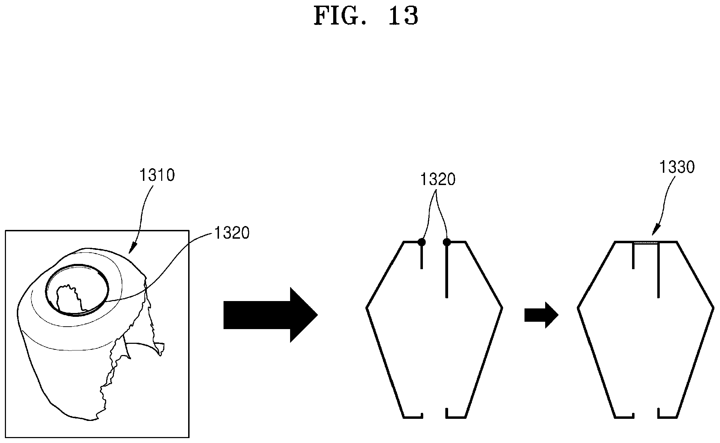

FIG. 13 is a diagram for explaining a method, performed by an image processing apparatus according to an embodiment, of obtaining an image in which a hole of an object is filled.

Referring to FIG. 13, the image processing apparatus 100 according to an embodiment may obtain scan data about an object including a hole. A method of obtaining scan data has been described above in detail with reference to FIG. 3, and thus a repeated description thereof will be omitted.

The image processing apparatus 100 according to an embodiment may obtain curvature information 1310 of points included in the scan data.

Curvature may be a value representing the degree of curvature of a curve or curved surface. A curvature value of a certain point included in the scan data may indicate the degree of curvature of a curve determined on the surface of the object where the certain point is located. In this case, curves passing through the certain point may have different degrees of bending depending on directions. Accordingly, the image processing apparatus 100 may determine a largest curvature value among the curvature values of the certain point as the curvature value of the certain point, or may determine an average value of the curvature values as the curvature value of the certain point. However, embodiments are not limited thereto.

When a curve or curved surface passing through a point is convex, the image processing apparatus 100 according to an embodiment may determine the sign of a curvature value of the point as (+), and when the curve or curved surface passing through the point is concave, the image processing apparatus 100 according to an embodiment may determine the sign of the curvature value of the point as (-).

The image processing apparatus 100 may determine the size of the curvature value of the point by using normal vectors of meshes adjacent to the point. A point and a mesh being adjacent to each other may mean that the mesh includes the point as a vertex. For example, the image processing apparatus 100 may determine the size of the curvature value of the point, based on a difference between at least two of the normal vectors of the meshes adjacent to the point. A difference between normal vectors may be expressed as an angle between the normal vectors.

The image processing apparatus 100 may determine the curvature value of the point such that the larger the difference between the normal vectors of adjacent meshes is, the larger the curvature value is, and the smaller the difference between the normal vectors of the meshes is, the smaller the curvature value is.

However, embodiments are not limited thereto, and the image processing apparatus 100 according to an embodiment may obtain curvature values of the points included in the scan data. The image processing apparatus 100 may determine the size of the curvature value of the point, based on the normal vectors of the points included in the scan data.

When the object according to an embodiment is an abutment including a screw hole, an entrance region of the screw hole has a substantially right angle shape, and thus, the entrance region of the screw hole has a large curvature value. The image processing apparatus 100 may detect a screw hole entrance region 1320, based on the curvature information 1310. The image processing apparatus 100 may obtain an image 1330 in which the screw hole is filled, by using a hole filling algorithm that fills the hole based on the screw hole entrance region 1320. For example, the image processing apparatus 100 may obtain the image 1330 in which the screw hole is filled, by using a Poisson algorithm or the like. However, embodiments are not limited thereto.

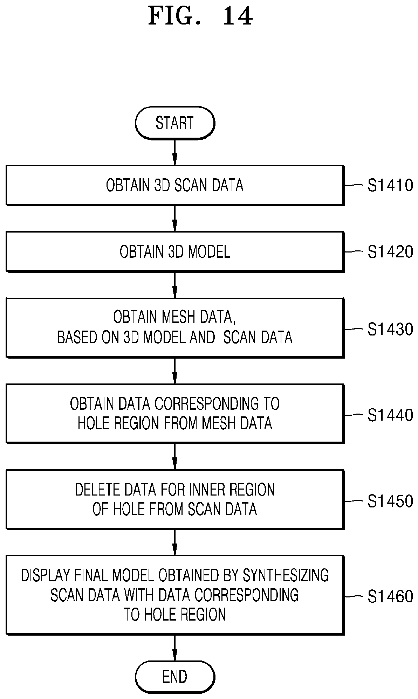

FIG. 14 is a flowchart of an image processing method according to an embodiment.

The image processing method of FIG. 14 may be performed by the image processing apparatus 100.

Referring to FIG. 14, the image processing apparatus 100 according to an embodiment may obtain 3D scan data about an object including a hole (S1410).

The image processing apparatus 100 may receive raw data obtained by the 3D scanner 10 and 50. For example, the image processing apparatus 100 may obtain the raw data by scanning an abutment fixed to a jig by an adhesive member by using the table scanner 50. Alternatively, the image processing apparatus 100 may obtain the raw data by scanning an abutment installed in the oral cavity by using the oral scanner 10.

The image processing apparatus 100 may generate scan data, based on the received raw data. Alternatively, the image processing apparatus 100 may retrieve the scan data stored in a memory.

When the scan data includes data for the adhesive member or the jig in addition to the abutment, the image processing apparatus 100 may set only the scan data for the abutment as a region of interest in the scan data. At this time, the image processing apparatus 100 may sets the region of interest based on a user input, or may automatically detect scan data for the abutment without a user input and set the detected scan data for the abutment as the region of interest. However, embodiments are not limited thereto.

The image processing apparatus 100 may obtain a 3D model surrounding the scan data (S1420).

For example, the image processing apparatus 100 may generate a 3D convex hull for the scan data by using a 3D convex hull algorithm. The 3D convex hull may include convex polygons generated based on some of vertex data included in the scan data. However, embodiments are not limited thereto.

The image processing apparatus 100 according to an embodiment may obtain wrapping mesh data, based on the 3D model and the scan data (S1430).

For example, the image processing apparatus 100 may generate initial mesh data composed of triangles, based on the 3D model. The triangles included in the initial mesh data may have more uniform shapes than the triangles included in the 3D model. The image processing apparatus 100 may generate wrapping mesh data by repeating the wrapping-subdivision-shrink processes with respect to the initial mesh data. The wrapping-subdivision-shrink processes have been described above in detail with reference to FIG. 5, and thus a repeated description thereof will be omitted.

When a difference between the density of the meshes generated by repeating the wrapping-subdivision-shrink processes is less than a preset value, the image processing apparatus 100 may terminate repetition of the wrapping-subdivision-shrink processes and may obtain the wrapping mesh data. The density of second meshes included in the wrapping mesh data may be greater than the density of first meshes included in the initial mesh data.

The image processing apparatus 100 according to an embodiment may align scan data and wrapping mesh data for an object. In this case, a known alignment algorithm may be used in a method of aligning the scan data and the wrapping mesh data, but embodiments are not limited thereto.

The image processing apparatus 100 according to an embodiment may obtain data corresponding to a hole region (S1440).

The image processing apparatus 100 may detect a non-overlapping region as the hole region of the object, while the scan data and the wrapping mesh data are aligned. The image processing apparatus 100 may obtain data corresponding to the hole region, by deleting remaining data except for mesh data corresponding to the detected hole region from the wrapping mesh data.

The image processing apparatus 100 according to an embodiment may delete data for the inner region of the hole from the scan data (S1450).

The image processing apparatus 100 may detect the inner region of the screw hole from the scan data, based on a boundary of the non-overlapping region, while the scan data and the wrapping mesh data are aligned. The image processing apparatus 100 may delete data for the inner region of the screw hole detected from the scan data.

The image processing apparatus 100 according to an embodiment may generate a final model by synthesizing the mesh data corresponding to the hole region in the wrapping mesh data with the remaining data obtained by deleting the inner region of the screw hole in the scan data, and display the final model (S1460).

The final model may include an image in which the screw hole is filled. The image processing apparatus 100 may display the filled screw hole region to be distinguished from the other region in the final model. For example, the image processing apparatus 100 may display a boundary line of the screw hole region, or may display the screw hole region in a different color from the other region. However, embodiments are not limited thereto.

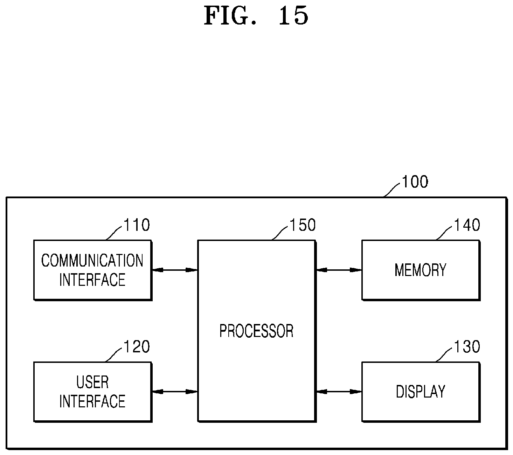

FIG. 15 is a block diagram of an image processing apparatus according to an embodiment.

An image processing method of FIG. 15 may be performed by the image processing apparatus 100. Thus, the image processing method of FIG. 14 may be a flowchart illustrating operations of the image processing apparatus 100.

Referring to FIG. 15, the image processing apparatus 100 may include a communication interface 110, a user interface 120, a display 130, a memory 140, and a processor 150.

The communication interface 110 may perform communication with at least one external electronic device (e.g., the intraoral scanner 10, a server, or an external medical device) through a wired or wireless communication network. The communication interface 110 may perform data communication with the at least one electronic device under a control by the processor 150.

In detail, the communication interface 110 may include at least one short-range communication module that performs communication according to a communication standard such as Bluetooth, Wi-Fi, Bluetooth Low Energy (BLE), NFC/RFID, Wi-Fi Direct, UWB, or ZIGBEE.

The communication interface 110 may further include a long-distance communication module for performing communication with a server for supporting long-distance communication according to a long-distance communication standard. In detail, the communication interface 110 may include a long-distance communication module for performing communication via a network for Internet communication. The communication interface 110 may include a long-distance communication module for performing communication via a communication network following a communication standard such as 3G, 4G, and/or 5G.

The communication interface 110 may also include at least one port for connection to an external electronic device (e.g., an intraoral scanner) through a wired cable in order to communicate with the external electronic device by wire. Accordingly, the communication interface 110 may perform communication with the external electronic device connected by wire through the at least one port.

The user interface 120 may receive a user input for controlling the image processing apparatus 100. The user interface 120 may include, but is not limited to, a user input device including a touch panel for sensing a user's touch, a button for receiving a user's push operation, a mouse for specifying or selecting one point on a user interface screen, or a keyboard.

The user interface 120 may include a voice recognition device for voice recognition. For example, the voice recognition device may be a microphone, and the voice recognition device may receive a user's voice command or voice request. Accordingly, the processor 150 may control an operation corresponding to the voice command or voice request to be performed.

The display 130 displays a screen. In detail, the display 130 may display a predetermined screen under a control by the processor 150. In detail, the display 130 may display a user interface screen including an intraoral image created based on data obtained by scanning a patient's oral cavity by the oral scanner 10. Alternatively, the display 130 may display a user interface screen including an image of an object generated based on data obtained by the table scanner 10.

Alternatively, the display 130 may display a user interface screen including information related to a patient's dental treatment.

The memory 140 may store at least one instruction. The memory 140 may store at least one instruction that the processor 150 executes. The memory 140 may store at least one program that the processor 150 executes. The memory 140 may store data received from the 3D scanner 10 and 50 (e.g., raw data obtained through scanning). Alternatively, the memory 140 may store an image three-dimensionally representing the object. The memory 140 according to an embodiment may include one or more instructions for obtaining an image of a filled shape of a hole from the image of the object including the hole. The memory 140 according to an embodiment may include one or more instructions for performing a method according to the present disclosure in order to obtain the image of the filled shape of the hole from the image of the object including the hole.

The processor 150 controls an intended operation to be performed, by executing the one or more instructions stored in the memory 140. The one or more instructions may be stored in an internal memory included in the processor 150 or in the memory 140 included in a data processing device separately from the processor.

In detail, the processor 150 may control at least one component included in the data processing device so that an intended operation is performed, by executing the at least one instruction. Accordingly, even when a case in which the processor performs predetermined operations is explained as an example, this may mean that the processor controls at least one component included in the data processing device so that the predetermined operations are performed.

The processor 150 according to an embodiment may generate scan data, based on row data received from the 3D scanner, by executing the one or more instructions stored in the memory 140. In this case, the raw data may include raw data obtained by scanning the abutment including the screw hole by using the 3D scanner.

The processor 150 may obtain a 3D model in which the scan data is surrounded, by executing the one or more programs stored in the memory 140. The processor 150 may generate a 3D convex hull for the scan data by using a 3D convex hull algorithm. The 3D convex hull may include convex polygons generated based on some of vertex data included in the scan data. However, embodiments are not limited thereto.

The processor 150 may obtain wrapping mesh data, based on the 3D model and the scan data, by executing the one or more programs stored in the memory 140. For example, the processor 150 may generate initial mesh data composed of triangles, based on the 3D model. The triangles included in the initial mesh data may have more uniform shapes than the triangles included in the 3D model. The processor 150 may generate wrapping mesh data by repeating the wrapping-subdivision-shrink processes with respect to the initial mesh data. The wrapping-subdivision-shrink processes have been described above in detail with reference to FIG. 5, and thus a repeated description thereof will be omitted.

When the wrapping mesh data is obtained, the processor 150 may align the scan data for the object with the wrapping mesh data for the object. In this case, a known alignment algorithm may be used in a method of aligning the scan data and the wrapping mesh data, but embodiments are not limited thereto.

The processor 150 may obtain data corresponding to a hole region, by executing the one or more programs stored in the memory 140. For example, the processor 150 may detect a non-overlapping region as the hole region of the object, while the scan data and the wrapping mesh data are aligned. The processor 150 may obtain data corresponding to the hole region, by deleting remaining data except for mesh data corresponding to the detected hole region from the wrapping mesh data.

The processor 150 may delete data for the inner region of the hole from the scan data, by executing the one or more programs stored in the memory 140.

For example, the processor 150 may detect the inner region of the screw hole from the scan data, based on a boundary of the non-overlapping region, while the scan data and the wrapping mesh data are aligned. The processor 150 may delete data for the inner region of the screw hole detected from the scan data.

By executing the one or more programs stored in the memory 140, the processor 100 may synthesize the mesh data corresponding to the hole region in the wrapping mesh data with the remaining data obtained by deleting the inner region of the screw hole in the scan data, to thereby generate and display a final model. The final model may include an image in which the screw hole is filled.

The processor 150 may display the filled screw hole region to be distinguished from the other region in the final model. For example, the processor 150 may display a boundary line of the screw hole region, or may display the screw hole region in a different color from the other region. However, embodiments are not limited thereto.

The processor 150 according to an example may be implemented as a type including at least one internal processor and a memory device (e.g., RAM, ROM, etc.) for storing at least one of programs, instructions, signals, and data which are to be processed or used by the internal processor.

The processor 150 may include a graphics processing unit (GPU) for graphic processing corresponding to video. The processor may be implemented as a system on chip (SoC) into which a core and a GPU are integrated. The processor may include multiple cores more than a single core. For example, the processor may include a dual-core, triple-core, quad-core, hexa-core, octa-core, deca-core, dodeca-core, hexadecimal core, and the like.

According to an embodiment, the processor 150 may generate an image, based on a 2D image received from the 3D scanner 10 and 50.

In detail,the communication interface 110 may receive data obtained by the 3D scanner 10 or 50, for example, raw data obtained through scanning, under a control by the processor 150. The processor 150 may generate a 3D image three-dimensionally representing the object, based on the raw data received from the communication interface 110. For example, the 3D scanner 10 and 50 may include an L camera corresponding to a left field of view and an R camera corresponding to a right field of view in order to restore a 3D image according to an optical triangulation method. The L camera and the R camera of the 3D scanner may obtain L image data corresponding to the left field of view and R image data corresponding to the right field of view, respectively. Then, the 3D scanner may transmit raw data including the L image data and the R image data to the communication interface 110 of the image processing apparatus 100.

Then, the communication interface 110 may transmit the received raw data to the processor 150. The processor 150 may generate an image three-dimensionally representing the object, based on the received raw data.

The processor 150 may control the communication interface 110 to directly receive the image three-dimensionally representing the object from an external server, a medical device, or the like. In this case, the processor may obtain a 3D image without creating a 3D image based on the raw data.

According to an embodiment, the processor 150 performing operations such as 'extraction', 'obtainment', and 'creation' may include not only a case where the processor 150 directly performs the above-described operations by executing at least one instruction, but also the processor 150 controlling other components so that the above-described operations are performed.

In order to implement the disclosed embodiments, the image processing apparatus 100 may include only some of the components shown in FIG. 15 or may include more components than the components shown in FIG. 15.

The image processing apparatus 100 may store and execute dedicated software linked to the 3D scanner 10 or 50. The dedicated software may be referred to as a dedicated program, a dedicated tool, or a dedicated application. When the image processing apparatus 100 operates in conjunction with the 3D scanner 10 and 50, the dedicated software stored in the image processing apparatus 100 may be connected to the 3D scanner 10 and 50 to receive, in real time, data obtained by scanning the object. For example, there is dedicated software for processing the data obtained through scanning of the object by Medit's i500 3D scanner. In detail, Medit produces and distributes 'Medit Link', which is software for processing, managing, using, and/or transmitting data obtained by a 3D scanner (e.g., i500). Because 'dedicated software' refers to a program, tool, or application operable in conjunction with a 3D scanner, various 3D scanners developed and sold by various manufacturers may be used in common. The above-described dedicated software may be produced and distributed separately from a 3D scanner that scans the object.

The image processing apparatus 100 may store and execute dedicated software corresponding to the i500 product. The dedicated software may perform one or more operations for obtaining, processing, storing, and/or transmitting the image. The dedicated software may be stored in a processor. The dedicated software may provide a user interface for use of the data obtained by the 3D scanner. A user interface screen provided by the dedicated software may include an image created according to an embodiment.

An image processing method according to an embodiment of the present disclosure may be embodied as program commands executable by various computer means and may be recorded on a computer-readable recording medium. An embodiment of the present disclosure may be a computer-readable storage medium having recorded thereon at least one program including at least one instruction which executes the image processing method.

The computer-readable storage medium may include program commands, data files, data structures, and the like separately or in combinations. Examples of the computer-readable storage medium may include a magnetic medium such as a hard disk, a floppy disk, or a magnetic tape, an optical medium such as a compact disk-read-only memory (CD-ROM) or a digital versatile disk (DVD), a magneto-optical medium such as a floptical disk, and a hardware device configured to store and execute program commands such as a ROM, a random-access memory (RAM), or a flash memory.

A machine-readable storage medium may be provided as a non-transitory storage medium. The non-transitory storage medium may refer to a tangible storage medium. The non-transitory storage medium may include a buffer in which data is temporarily stored.

According to an embodiment, image processing methods according to various disclosed embodiments may be provided by being included in a computer program product. The computer program product may be distributed in the form of a machine-readable storage medium (e.g., compact disc read only memory (CD-ROM)). Alternatively, the computer program product may be directly distributed (e.g., downloaded or uploaded) online via an application store (e.g., Play Store^{™}) or between two user devices (e.g., smartphones). In detail, a computer program product according to an embodiment may include a storage medium on which a program including at least one instruction is recorded to perform an image processing method according to an embodiment.

While one or more embodiments of the disclosure have been described with reference to the figures, it will be understood by those of ordinary skill in the art that various changes in form and details may be made therein without departing from the spirit and scope as defined by the following claims.

## Claims

1. An image processing method comprising:
obtaining three-dimensional (3D) scan data by scanning an object including a hole;
obtaining data corresponding to the hole region, based on the scan data; and
displaying a final model representing a filled shape of the hole, based on the scan data and the data corresponding to the hole region.

2. The image processing method of claim 1, wherein the displaying of the final model comprises:
deleting data for an inner region of the hole from the scan data; and
displaying the final model obtained by synthesizing scan data from which the data for the inner region of the hole has been deleted with the data corresponding to the hole region.

3. The image processing method of claim 1, wherein the obtaining of the data corresponding to the hole region, based on the scan data, comprises:
obtaining a 3D model surrounding the scan data;
obtaining mesh data corresponding to a surface of the object, based on the 3D model and the scan data; and
obtaining the data corresponding to the hole region from the mesh data.

4. The image processing method of claim 3, wherein the 3D model includes a 3D convex hull for the scan data.

5. The image processing method of claim 3, wherein the obtaining of the mesh data corresponding to the surface of the object, based on the 3D model and the scan data, comprises:
obtaining first mesh data, based on the 3D model; and
obtaining second mesh data, based on the first mesh data and the scan data,
wherein a density of second meshes included in the second mesh data is greater than a density of first meshes included in the first mesh data.

6. The image processing method of claim 5, wherein the obtaining of the second mesh data, based on the first mesh data and the scan data, comprises:
projecting the first meshes included in the first mesh data on third meshes included in the scan data;
subdividing the projected meshes; and
generating the second meshes by shrinking the subdivided meshes.

7. The image processing method of claim 6, further comprising detecting an inner region of the hole from the scan data,
wherein the projecting of the first meshes on the third meshes comprises projecting the first meshes on the third meshes, based on whether the first meshes correspond to the inner region of the hole.

8. The image processing method of claim 6, wherein a difference between the density of the second meshes and a density of the third meshes included in the scan data is less than a preset value.

9. The image processing method of claim 3, wherein the obtaining of the data corresponding to the hole region from the mesh data comprises deleting mesh data overlapping the scan data from the mesh data.

10. The image processing method of claim 3, wherein the displaying of the final model comprises:
detecting a boundary of a region where the mesh data and the scan data do not overlap, and deleting data for the inner region of the hole from the scan data, based on the boundary; and
displaying the final model obtained by synthesizing scan data from which the data for the inner region of the hole has been deleted with the data corresponding to the hole region.

11. The image processing method of claim 1, wherein the displaying of the final model comprises displaying a hole-filled region to be distinguished from the other region.

12. The image processing method of claim 1, wherein the object includes an abutment including a screw hole.

13. An image processing apparatus comprising:
a display;
a memory storing one or more instructions; and
a processor,
wherein the processor is configured to execute the one or more instructions stored in the memory to:
obtain three-dimensional (3D) scan data by scanning an object including a hole;
obtain data corresponding to the hole region, based on the scan data; and
control the display to display a final model representing a filled shape of the hole, based on the scan data and the data corresponding to the hole region.

14. The image processing apparatus of claim 13, wherein the processor is further configured to execute the one or more instructions stored in the memory to:
delete data for an inner region of the hole from the scan data; and
control the display to display the final model obtained by synthesizing scan data from which the data for the inner region of the hole has been deleted with the data corresponding to the hole region.

15. The image processing apparatus of claim 13, wherein the processor is further configured to execute the one or more instructions stored in the memory to:
obtain a 3D model surrounding the scan data;
obtain mesh data corresponding to a surface of the object, based on the 3D model and the scan data; and
obtain the data corresponding to the hole region by deleting mesh data overlapping the scan data from the mesh data.

16. The image processing apparatus of claim 15, wherein
the processor is further configured to execute the one or more instructions stored in the memory to:
obtain first mesh data, based on the 3D model; and
obtain second mesh data, based on the first mesh data and the scan data, and
a density of second meshes included in the second mesh data is greater than a density of first meshes included in the first mesh data.

17. The image processing apparatus of claim 16, wherein the processor is further configured to execute the one or more instructions stored in the memory to:
project the first meshes included in the first mesh data on third meshes included in the scan data;
subdivide the projected meshes; and
generate the second meshes by shrinking the subdivided meshes.

18. The image processing apparatus of claim 17, wherein the processor is further configured to execute the one or more instructions stored in the memory to:
detect an inner region of the hole from the scan data; and
project the first meshes on the third meshes, based on whether the first meshes correspond to the inner region of the hole.

19. The image processing apparatus of claim 15, wherein the processor is further configured to execute the one or more instructions stored in the memory to:
detect a boundary of a region where the mesh data and the scan data do not overlap, from the scan data, and delete data for the inner region of the hole from the scan data, based on the boundary; and
control the display to display the final model obtained by synthesizing scan data from which the data for the inner region of the hole has been deleted with the data corresponding to the hole region.

20. The image processing apparatus of claim 13, wherein the processor is further configured to execute the one or more instructions stored in the memory to control the display to display the hole-filled region to be distinguished from the other region.
